# EUROPÄISCHE PATENTANMELDUNG

(11) **EP 0 717 514 A2**
(43) Veröffentlichungstag der Anmeldung: **19.06.1996**
(21) Anmeldenummer: 95119564.3
(22) Anmeldetag: 12.12.1995
(51) Int. Cl.: H04B 10/145

(54) **Optische Sendeeinrichtung für ein optisches Nachrichtenübertragungssystem in Verbindung mit einem Funksystem**

(30) Priorität: 13.12.1994 DE 4444218
(71) Anmelder: Alcatel SEL Aktiengesellschaft, D-70435 Stuttgart (DE); ALCATEL N.V., NL-2288 BH Rijswijk (NL)
(72) Erfinder: Hofstetter, Rolf, Dr., CH-7205 Zizers (CH); O'Reilly, J.J., Prof., London, N2 OPT (GB); Schmuck, Harald, D-70825 Korntal (DE); Lane, Phil M.,Dr., London, WC 1 H ONG (DE)
(74) Vertreter: Schätzle, Albin, Dipl.-Phys.

(57) **Zusammenfassung**

Eine bekannte optische Sendeeinrichtung für ein optisches Nachrichtenübertragungssystem, das empfangsseitig an ein Funksystem angeschlossen ist, hat einen DFB-Laser, einen optischen Modulator, eine Signalquelle und ein optisches Filter. Diese optische Sendeeinrichtung sendet Licht aus, das nicht durch ein Nachrichtensignal moduliert ist. Nachteilig an der optischen Sendeeinrichtung ist, daß das optische Filter und der DFB-Laser aufeinander abgestimmt sein müssen.

Ein Ausführungsbeispiel der erfindungsgemäßen optischen Sendeeinrichtung hat eine Lichtquelle (1), eine Modulationseinrichtung (2) und eine Steuereinrichtung (2), die die Lichtquelle (1) und die optische Modulationseinrichtung (2) so steuert, daß das an deren Ausgang (5) austretende Licht mit einem Nachrichtensignal moduliert ist.

## Beschreibung

Die Erfindung betrifft ein Nachrichtenübertragungssystem gemäß dem Oberbegriff des Patentanspruchs 1 und eine optische Sendeeinrichtung für ein solches Nachrichtenübertragungssystem gemäß dem Oberbegriff des Patentanspruchs 3, 7 oder 8. Außerdem betrifft die Erfindung ein Verfahren zum Übertragen von Nachrichtensignalen.

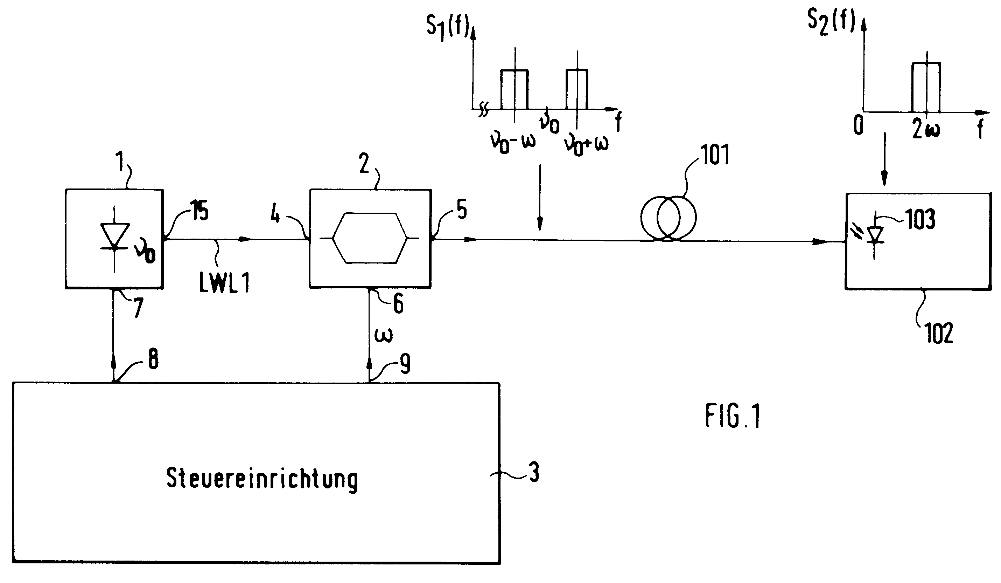

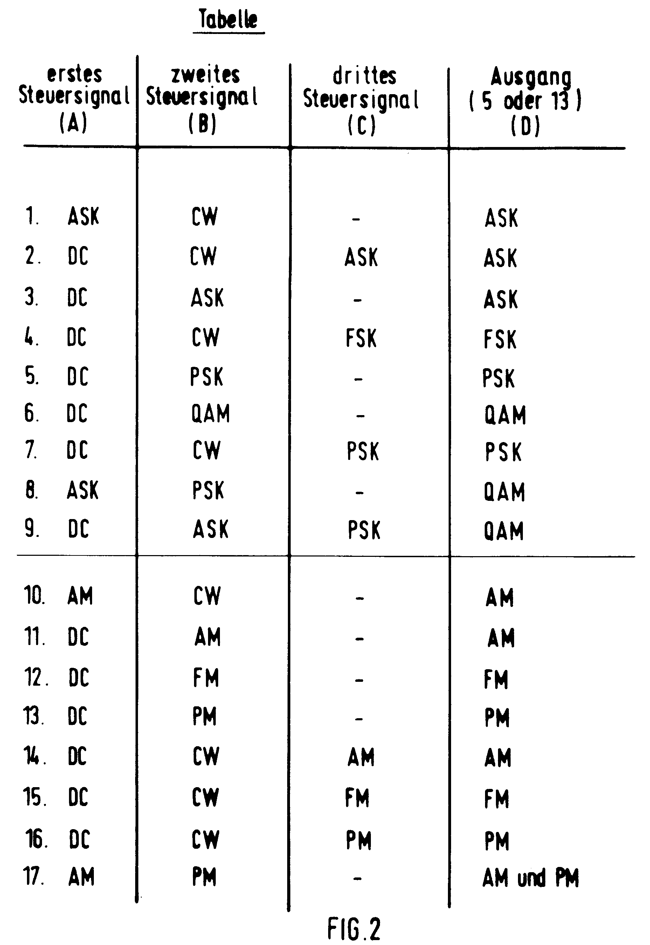

Ein Nachrichtenübertragungssystem und eine optische Sendeeinrichtung mit in den Oberbegriffen angegebenen Merkmalen sind bekannt aus: J.J. O'Reilly, "RACE R2005: microwave optical duplex antenna link", IEE Proceedings-J, Vol. 140, No. 6, December 1993, Seiten 385-391. Die dort in Fig. 2 gezeigte optische Sendeeinrichtung ist Bestandteil eines in Fig. 1 gezeigten optischen Nachrichtenübertragungssystems, bei dem empfangsseitig neben einem optischen Empfänger, der einen optoelektrischen Wandler hat, eine Antenne vorhanden ist. Zwischen dieser Antenne und der einer entfernten Funkstation (transposer) werden Funksignale übertragen, deren Frequenz z.B. 60 GHz beträgt; die Wellenlänge dieser Funksignale liegt somit im Bereich einiger Millimeter.

Die in der dortigen Fig. 2 gezeigte optische Sendeeinrichtung (dual frequency optical source) hat u.a. einen DFB-Laser, einen optischen Modulator, eine Signalquelle (signal source) und ein optisches Filter. Das vom DFB-Laser ausgesendete Licht ist ein Dauerstrichsignal (cw-Signal, cw: continuous wave) und hat eine optische Frequenz νₒ (Trägerfrequenz). Dieses Licht wird einem Eingang des optischen Modulators zugeführt, der von der Signalquelle durch eine Steuerspannung (cw-drive signal V(t)) gesteuert wird. Die Steuerspannung V(t) ist aus einer Vorspannung und einer sinusförmigen Spannung festgelegter Frequenz ω zusammengesetzt. Die Steuerspannung V(t) als Funktion der Zeit ist in der dortigen Gleichung (1) angegeben und die sich daraufhin am Ausgang des optischen Modulators ergebende elektrische Feldstärke als Funktion der Zeit ist in der Gleichung (3) angegeben. Das austretende Licht hat ein Frequenzspektrum mit zwei ausgeprägten Frequenzanteilen (Spektrallinien), die im Abstand der festgelegten Frequenz ω der Steuerspannung V(t) symmetrisch um die unterdrückte optische Trägerfrequenz νₒ angeordnet sind, d.h. die beiden Frequenzanteile haben einen Frequenzabstand von 2ω.

Das dem Ausgang des ersten optischen Modulators nachgeschaltete optische Filter trennt die beiden Frequenzanteile: Das optische Filter hat deshalb zwei Ausgänge O/P1 und O/P2. Um ein optimales Trennen der beiden Frequenzanteile zu ermöglichen, hat die optische Sendeeinrichtung eine Regeleinrichtung, die den DFB-Laser so regelt, daß die optische Frequenz νₒ immer auf das optische Filter abgestimmt ist.

Die oben beschriebene optische Sendeeinrichtung erzeugt somit zwei Lichtanteile, die nicht durch ein Nachrichtensignal moduliert sind.

Um mit einer solchen optischen Sendeeinrichtung ein durch ein Nachrichtensignal moduliertes Licht auszusenden, ist ein (erster) Ausgang des optischen Filters mit einem optischen Modulator und der andere (zweite) Ausgang mit einem Koppler verbunden. Der optische Modulator moduliert den am ersten Ausgang des optischen Filters austretenden Lichtanteil mit einem Nachrichtensignal. Es handelt sich dabei um eine externe Modulation des am ersten Ausgang des optischen Filters austretenden Lichtanteils. Das Frequenzspektrum des modulierten Lichtanteils hat also nur einen der beiden Frequenzanteile. Dieser modulierte Lichtanteil, der am Ausgang des optischen Modulators austritt, und der am zweiten Ausgang des optischen Filters austretende Lichtanteil wurde durch den Koppler in einen Lichtwellenleiter eingekoppelt.

Im Lichtwellenleiter breitet sich somit Licht aus, das aus zwei Lichtanteilen zusammengesetzt ist: Ein mit einem Nachrichtensignal modulierter Lichtanteil mit der ersten Frequenz und ein unmodulierter Lichtanteil mit der zweiten Frequenz. Dieses zusammengesetzte Licht trifft im optischen Empfänger auf die Oberfläche einer PIN-Photodiode, wodurch durch kohärente Überlagerung der beiden Lichtanteile das gewünschte Millimeterwellen-Signal entsteht.

Wie bereits erwähnt, hat die optische Sendeeinrichtung ein optisches Filter und eine Frequenzregelung für den DFB-Laser. An das dafür notwendige optische Filter sind hohe Anforderungen bezüglich der Trenneigenschaften zu stellen. Ein solches optisches Filter ist deshalb teuer. Auch an die Frequenzregelung sind hohe Anforderungen zu stellen, so daß auch diese einen hohen Aufwand erfordert, da die optische Frequenz νₒ des DFB-Lasers und das optische Filter gegenseitig stabilisiert werden müssen. Durch diese optische Sendeeinrichtung erfordert auch das gesamte Nachrichtenübertragungssystem einen hohen Aufwand.

Der Erfindung liegt die Aufgabe zugrunde, ein kostengünstiges Nachrichtenübertragungssystem anzugeben. Ein die Aufgabe lösendes Nachrichtenübertragungssystem ist Gegenstand des Patentanspruchs 1.

Außerdem liegt der Erfindung die Aufgabe zugrunde, eine optische Sendeeinrichtung für ein Nachrichtenübertragungssystem anzugeben, die kostengünstig und mit geringem Aufwand realisiert werden kann. Verschiedene Lösungen der Aufgabe sind in den Patentansprüchen 3, 7 und 8 angegeben. Der Erfindung liegt zudem die Aufgabe zugrunde, ein vereinfachtes Verfahren zum Übertragen von Nachrichtensignalen anzugeben. Ein diese Aufgabe lösendes Verfahren ist Gegenstand des Patentanspruchs 2. Vorteilhafte Ausgestaltungen der Erfindung sind in den Unteransprüchen angegeben.

Ein Vorteil der Erfindung ist, daß das zu übertragende Licht weniger gedämpft ist, da in der erfindungsgemäßen optischen Sendeeinrichtung kein optisches Filter mehr benötigt wird. Nach der Detektion im optischen Empfänger steht somit eine um mehr als 10 dB größere Leistung für das Millimeterwellen-Signal zur Verfügung.

Ein weiterer Vorteil der Erfindung ist, daß der Frequenzabstand 2ω beliebig gewählt werden kann, da kein optisches Filter mehr notwendig ist.

Die Erfindung wird im folgenden anhand von Zeichnungen näher erläutert. Es zeigen:
- Fig. 1: ein Blockschaltbild eines Nachrichtenübertragungssystems mit einem ersten Ausführungsbeispiel einer optischen Sendeeinrichtung,
- Fig. 2: eine Tabelle von Kombinationsmöglichkeiten von Steuersignalen, und
- Fig. 3: ein Blockschaltbild eines Nachrichtenübertragungssystems mit einem zweiten Ausführungsbeispiel einer optischen Sendeeinrichtung.

In Fig. 1 ist ein Blockschaltbild eines Nachrichtenübertragungssystems mit einem ersten Ausführungsbeispiel einer optischen Sendeeinrichtung gezeigt, die eine Lichtquelle 1, eine optische Modulationseinrichtung 2, die einen Eingang 4, einen Ausgang 5 und einen Anschluß 6 hat, und eine Steuereinrichtung 3 hat. Ein Ausgang 15 der Lichtquelle 1 ist durch einen Lichtwellenleiter LWL1 mit dem Eingang 4 der optischen Modulationseinrichtung 2 verbunden, so daß von der Lichtquelle 1 ausgesendetes Licht in die optische Modulationseinrichtung 2 eintritt. Ein Lichtwellenleiter 101 verbindet den Ausgang 5 mit einer optischen Empfangseinrichtung 102, in der sich eine Photodiode 103 befindet. Der Lichtwellenleiter 101 kann auch verzweigt sein, so daß mehr als eine Empfangseinrichtung an den Ausgang 5 anschließbar ist.

Die Steuereinrichtung 3 hat zwei Ausgänge 8, 9 für elektrische Steuersignale: Der Ausgang 8 ist mit einem Anschluß 7 der Lichtquelle 1 verbunden, und der Ausgang 9 ist mit dem Anschluß 6 der optischen Modulationseinrichtung 2 verbunden.

Üblicherweise ist die Lichtquelle 1 ein Lasermodul, in dem z.B. ein DFB-Laser, eine Schaltung zur Temperaturregelung und eine Schaltung zur Leistungsregelung vorhanden ist. Der DFB-Laser sendet Laserlicht aus, das z.B. eine Wellenlänge von 1550 nm, oder anders ausgedrückt eine optische Frequenz νₒ von 193 THz hat. Für ein solches Laserlicht wird im folgenden allgemein der Begriff Licht verwendet, unabhängig davon, ob es sichtbar oder unsichtbar ist.

Ein DFB-Laser ist ein Monomode-Laser, d.h. er sendet Laserlicht aus, das nur eine Wellenlänge (idealerweise nur eine Spektrallinie) hat. Anstatt des DFB-Lasers kann z.B. auch ein BH-Laser verwendet werden, der ein Multimode-Laser ist, d.h. er sendet Laserlicht aus, das aus mehreren, z.B. 10 Spektrallinien besteht.

Es ist möglich, den DFB-Laser, den Lichtwellenleiter LWL1 und die optische Modulationseinrichtung 2 in der Technik der integrierten Optik herzustellen.

Die optische Modulationseinrichtung 2 ist z.B. ein Mach-Zehnder Modulator, der allgemein bekannt ist, z.B. aus: R.G. Walker, "High-Speed III-V Semiconductor Intensity Modulators", IEEE Journal of Quantum Electronics, Vol. 27, No. 3, März 1991, Seiten 654 bis 667. Die optische Modulationseinrichtung 2 kann aber auch einer der anderen dort genannten Modulatoren sein.

Wie die Steuereinrichtung 3 die Lichtquelle 1 und die optische Modulationseinrichtung steuert, damit das an deren Ausgang 5 austretende Licht mit einem Nachrichtensignal moduliert ist, wird im folgenden in Verbindung mit Fig. 2 erläutert. Die Steuereinrichtung 3 liefert ein erstes Steuersignal für die Lichtquelle 1 und ein zweites Steuersignal für die optische Modulationseinrichtung 2. Die Lichtquelle 1 wird durch einen Strom gesteuert und die optische Modulationseinrichtung durch eine Spannung. Demnach sind in der Steuereinrichtung 3 entsprechende, in Fig. 1 nicht gezeigte Einrichtungen, z.B. eine Stromquelle und eine Spannungsquelle, vorhanden. Das erste Steuersignal für die Lichtquelle 1 ist ein Betriebsstrom des Lasers (Laserstrom) und das zweite Steuersignal ist eine Steuerspannung. Bei der Verwendung eines Mach-Zehnder Modulators ist die Steuerspannung aus einer Vorspannung, durch die ein Arbeitspunkt eingestellt wird, und einer sinusförmigen Spannung zusammengesetzt. Im folgenden wird die Steuerspannung zur Vereinfachung mit der sinusförmigen Spannung gleichgesetzt, ohne die Vorspannung explizit zu erwähnen.

In Fig. 1 sind zur Verdeutlichung zwei Frequenzspektren S₁(f), S₂(f) eingezeichnet. Im Lichtwellenleiter 101 breitet sich Licht aus, das das Frequenzspektrum S₁(f) hat. Die beiden Frequenzanteile sind symmetrisch um die optische Frequenz νₒ angeordnet und haben einen Frequenzabstand von 2ω: Ein Frequenzanteil befindet sich bei νₒ-ω und der andere Frequenzanteil befindet sich bei νₒ+ω. Ein in dem Licht enthaltenes Nachrichtensignal ist durch eine übliche Darstellungweise angedeutet.

Ein dem Nachrichtensignal entsprechendes elektrisches Signal, das die Photodiode 103 erzeugt, hat das Frequenzspektrum S₂(f). Dieses Frequenzspektrum S₂(f) hat ein Frequenzband im Bereich von 2ω.

Die in Fig. 1 eingezeichneten Frequenzspektren S₁(f), S₂(f) ergeben sich, wenn ein DFB-Laser verwendet wird. Von ihm ausgesendetes Licht der optischen Frequenz νₒ wird in zwei Lichtanteile aufgespaltet: Ein Lichtanteil mit der Frequenz νₒ-ω und der andere Lichtanteil mit der Frequenz νₒ+ω. Bei der Verwendung eines BH-Lasers wird das von ihm ausgesendete Licht ebenfalls in zwei Lichtanteile aufgespaltet. Hat das Licht des BH-Lasers z.B. zehn Spektrallinien ergeben sich nach der Aufspaltung zwanzig Spektrallinien, d.h. jede Spektrallinie wird verdoppelt. Ein Lichtanteil besteht hier aus zehn Spektrallinien und der andere Lichtanteil ebenfalls aus zehn Spektrallinien.

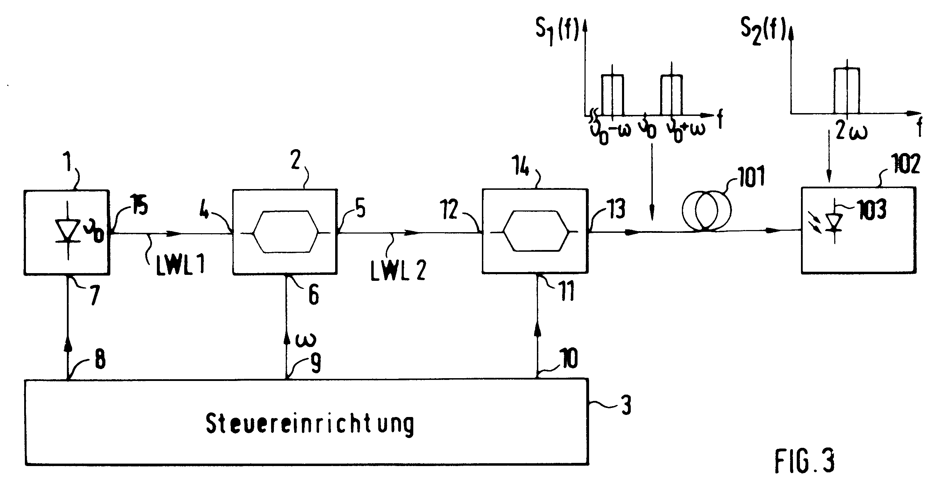

In Fig. 2 ist eine Auswahl von mehreren Kombinationsmöglichkeiten für das erste und zweite Steuersignal (Spalten A, B) in einer Tabelle gezeigt, um ein gewünschtes Ausgangssignal (Spalte D) zu erhalten. Ein ebenfalls in dieser Tabelle eingetragenes drittes Steuersignal (Spalte C) wird in Zusammenhang mit Fig. 3 erläutert. In den Zeilen 1-9 der Tabelle sind Kombinationsmöglichkeiten gezeigt, um am Ausgang 5 Licht zu erhalten, das mit einem digitalen Nachrichtensignal moduliert ist, und in den Zeilen 10-17 der Tabelle sind Kombinationsmöglichkeiten gezeigt, um am Ausgang 5 Licht zu erhalten, das mit einem analogen Nachrichtensignal moduliert ist. Ein Nachrichtensignal kann sowohl ein Datensignal als auch ein Sprachsignal sein.

Um ein intensitätsmoduliertes Licht (ASK; Amplitude Shift Keying, Amplitudenumtastung) am Ausgang 5 zu erhalten (Zeile 1), ist das erste Steuersignal, d.h. der Laserstrom, ein digitales Nachrichtensignal, so daß von der Lichtquelle 1 ausgesendetes Licht in seiner Intensität entsprechend der im Laserstrom enthaltenen Nachricht moduliert ist (ASK); die Lichtquelle 1 kann z.B. so gesteuert werden, daß die Lichtintensität zwei diskrete Werte hat. Das zweite Steuersignal, d.h. die Steuerspannung, ist ein in seiner Amplitude konstantes Sinussignal mit einer festgelegten konstanten Frequenz ω (cw). Die damit gesteuerte optische Modulationseinrichtung 2 bewirkt eine Aufspaltung des modulierten Lichts in zwei ebenso modulierte Lichtanteile verschiedener Frequenzen νₒ-ω, νₒ+ω.

Alternativ dazu ist es möglich (Zeile 3), daß das erste Steuersignal, d.h. der Laserstrom, ein kein Nachrichtensignal tragender Gleichstrom (DC, Direct Current) ist, so daß von der Lichtquelle 1 ausgesendetes Licht eine konstante Intensität hat, und das zweite Steuersignal ein digitales Nachrichtensignal ist, das ein in seiner Amplitude veränderliches Sinussignal mit festgelegter konstanter Frequenz ist (ASK). Dies bedeutet, daß das zweite Steuersignal (Sinussignal) entsprechend dem zu übertragenden digitalen Nachrichtensignal moduliert, z.B. ein- und ausgeschaltet, wird; seine Amplitude hat dann zwei diskrete Werte.

Außerdem ist es möglich, die Lichtquelle 1 durch einen ein Nachrichtensignal tragenden Gleichstrom, und die optische Modulationseinrichtung 2 durch eine das Nachrichtensignal tragende Steuerspannung zu steuern, so daß am Ausgang 5 austretendes Licht intensitätsmoduliert ist (Zeile 8). Hierbei gibt es zwei Möglichkeiten: Beide Nachrichtensignale sind gleich oder die Nachrichtensignale sind unterschiedlich. Bei einem QAM-modulierten Licht (Zeile 8) wird durch dessen Intensität ein Nachrichtensignal wiedergegeben und durch dessen Phase das andere Nachrichtensignal. Mit Hilfe einer entsprechenden Demodulationseinrichtung ist es möglich, beide Nachrichtensignale zurückzugewinnen. Auch bei einer Kombinationsmöglichkeit, wie in Zeile 17 gezeigt, können die Nachrichtensignale in der Intensität und in der Phase des Lichts erhalten sein.

Da die Tabelle selbsterklärend ist, wird darauf verzichtet, alle Kombinationsmöglichkeiten an dieser Stelle anzugeben. Zusätzlich zu den bereits erklärten Abkürzungen ASK, CW und DC sind in der Tabelle noch folgende Abkürzungen angegeben:
- FSK, Frequency Shift Keying, Frequenzumtastung
- PSK, Phase Shift Keying, Phasenumtastung
- QAM, Quadrature Amplitude Modulation
- AM, Amplitudenmodulation
- FM, Frequenzmodulation.

Die in Fig. 1 gezeigte optische Sendeeinrichtung kann sowohl amplitudenmodulierte, d.h. ASK, AM, QAM, als auch winkelmodulierte, d.h. FSK, FM, PSK, PM, Nachrichtensignale aussenden.

In Fig. 3 ist ein Blockschaltbild eines Nachrichtenübertragungssystems mit einem zweiten Ausführungsbeispiels einer optischen Sendeeinrichtung gezeigt. Dieses Ausführungsbeispiel ist eine Erweiterung des in Fig. 1 gezeigten ersten Ausführungsbeispiels. Die in der Fig. 1 gezeigten Bestandteile Lichtquelle 1, optische Modulationseinrichtung 2 und Steuereinrichtung sind auch in Fig. 3 in der gleichen Anordnung und mit gleichen Bezugszeichen gezeigt. Deshalb wird an dieser Stelle nur auf die Erweiterung eingegangen.

Der Ausgang 5 der ersten optischen Modulationseinrichtung 2 ist durch einen Lichtwellenleiter LWL2 mit einem Eingang 12 einer optischen Modulationseinrichtung 14 verbunden.

Die Steuereinrichtung 3 ist derart erweitert, daß sie einen dritten Ausgang 10 für ein drittes Steuersignal hat. Das dritte Steuersignal ist ebenfalls wie das zweite Steuersignal eine Steuerspannung. Dieser Ausgang 10 ist mit einem Anschluß 11 der optischen Modulationseinrichtung 14 verbunden. Auch hier gilt, daß die Steuerspannungen jeweils eine Vorspannung aufweisen, obwohl diese im folgenden nicht explizit erwähnt werden.

An einem Ausgang 13 der optischen Modulationseinrichtung 14 tritt Licht aus, das ebenfalls ein Frequenzspektrum mit zwei Spektralanteilen hat. Dieser Ausgang 13 ist durch den Lichtwellenleiter 101 mit der Empfangseinrichtung 102 verbunden, in der sich die Photodiode 103 befindet.

Auch in Fig. 3 sind zwei Frequenzspektren S₁(t), S₂(t) eingezeichnet, für die das in Fig. 1 gesagte gilt.

Zur Erklärung, wie die Steuereinrichtung 3 die Lichtquelle 1 und die beiden optischen Modulationseinrichtungen 2, 14 steuert, wird wieder auf Fig. 2 Bezug genommen. Kombinationsmöglichkeiten der drei Steuersignale (Spalten A, B, C), die für die in Fig. 3 gezeigte optische Sendeeinrichtung möglich sind, sind in den Zeilen 2, 4, 7, 9, 14, 15, 16 angegeben.

Beispielhaft wird erläutert, wie es dazu kommt, daß am Ausgang 13 Licht mit zwei Frequenzanteilen austritt, das durch ein digitales Nachrichtensignal ASK-moduliert ist (Zeile 2): Das erste Steuersignal, d.h. der Laserstrom, ist ein Gleichstrom (DC), der nicht durch eine Nachricht moduliert ist, so daß die Lichtquelle 1 Licht konstanter Intensität aussendet. Das zweite Steuersignal, d.h. die (erste) Steuerspannung, ist ein in seiner Amplitude konstantes Sinussignal mit festgelegter konstanter Frequenz ω. Dies bewirkt, daß das am Ausgang 5 der optischen Modulationseinrichtung 2 austretende Licht unmoduliert ist, jedoch zwei Frequenzanteile enthält. Das dritte Steuersignal, d.h. die (zweite) Steuerspannung, trägt ein Nachrichtensignal und ist ein in seiner Amplitude veränderliches Sinussignal mit festgelegter konstanter Frequenz. Somit bewirkt die Modulationseinrichtung 14, daß beide Frequenzanteile des eintretenden Lichts mit einer Nachricht moduliert werden.

Auch die in Fig. 3 gezeigte optische Sendeeinrichtung kann sowohl amplitudenmodulierte, d.h. ASK, AM, als auch winkelmodulierte, d.h. FSK, FM, PSK, PM, Nachrichtensignale aussenden.

Den beiden Ausführungsbeispielen einer optischen Sendeeinrichtung liegt der gemeinsame Gedanke zugrunde, daß durch geeignete Steuerung der einzelnen Bestandteile (s. Tabelle in Fig. 2) aus der optischen Sendeeinrichtung Licht austritt, das zwei Frequenzanteile enthält und mit einem Nachrichtensignal moduliert ist. Dadurch ist im Gegensatz zur eingangs genannten bekannten optischen Sendeeinrichtung keine Filterung und keine Regelung nötig. Im Lichtwellenleiter 101 breitet sich demnach Licht aus, das aus zwei Lichtanteilen besteht, die beide durch ein Nachrichtensignal moduliert sind. In der optischen Empfangseinrichtung 102 erfolgt eine kohärente Überlagerung dieser beiden Lichtanteile. In dem eingangs genannten bekannten Nachrichtenübertragungssystem breitet sich im Gegensatz dazu Licht aus, bei dem nur ein Lichtanteil durch ein Nachrichtensignal moduliert ist.

Bei dem erfindungsgemäßen Nachrichtenübertragungssystem kommt ein Verfahren zum Übertragen von Nachrichtensignalen zur Anwendung, bei dem durch die in Fig. 1 oder Fig. 3 gezeigte optische Sendeeinrichtung aus zwei durch ein zu übertragendes Nachrichtensignal modulierten Lichtanteilen bestehendes Licht ausgesendet wird, und bei dem dieses über den Lichtwellenleiter 101 übertragene Licht von der optischen Empfangseinrichtung 102 empfangen wird, wobei die beiden durch das Nachrichtensignal modulierten Lichtanteile kohärent überlagert werden.

## Patentansprüche

1. Nachrichtenübertragungssystem, mit einer optischen Sendeeinrichtung, einem Lichtwellenleiter und einer optischen Empfangseinrichtung (102), bei dem die optische Sendeeinrichtung aus zwei Lichtanteilen bestehendes Licht aussendet, das die optische Empfangseinrichtung (102) empfängt, wobei eine kohärente Überlagerung beider Lichtanteile erfolgt,
**dadurch gekennzeichnet**, daß beide von der optischen Sendeeinrichtung (1, 2, 3; 14) ausgesendeten Lichtanteile durch ein zu übetragendes Nachrichtensignal moduliert sind.

2. Verfahren zum Übertragen von Nachrichtensignalen, bei dem durch eine optische Sendeeinrichtung aus zwei durch ein zu übertragendes Nachrichtensignal modulierten Lichtanteilen bestehendes Licht ausgesendet wird, und bei dem dieses über einen Lichtwellenleiter (101) übertragene Licht von einer optischen Empfangseinrichtung (102) empfangen wird, wobei die beiden durch das Nachrichtensignal modulierte Lichtanteile kohärent überlagert werden.

3. Optische Sendeeinrichtung mit einer durch einen Betriebsstrom gesteuerten Lichtquelle (1) und einer durch eine Steuerspannung gesteuerten optischen Modulationseinrichtung (2) für von der Lichtquelle (1) ausgesendetes Licht,
**dadurch gekennzeichnet**, daß eine Steuereinrichtung (3) vorhanden ist, die den Betriebsstrom der Lichtquelle (1) oder die Steuerspannung der optischen Modulationseinrichtung (2) durch ein Nachrichtensignal moduliert, so daß an einem Ausgang (5) der optischen Modulationseinrichtung (2) austretendes Licht durch das Nachrichtensignal moduliert ist.

4. Optische Sendeeinrichtung nach Anspruch 3,
dadurch gekennzeichnet, daß die Steuereinrichtung (3) die Lichtquelle (1) durch einen das Nachrichtensignal tragenden Gleichstrom steuert, so daß von der Lichtquelle (1) ausgesendete Licht in dessen Intensität moduliert ist, und, daß die Steuereinrichtung (3) die optische Modulationseinrichtung (2) durch eine Steuerspannung mit konstanter Amplitude und konstanter Frequenz steuert, so daßam Ausgang (5) der optischen Modulationseinrichtung (2) austretendes Licht intensitätsmoduliert ist.

5. Optische Sendeeinrichtung nach Anspruch 3,
dadurch gekennzeichnet, daß die Steuereinrichtung (3) die Lichtquelle (1) durch einen kein Nachrichtensignal tragenden Gleichstrom steuert, so daß von der Lichtquelle (1) ausgesendetes Licht eine konstante Intensität hat, und daß die Steuereinrichtung (3) die optische Modulationseinrichtung (2) durch eine das Nachrichtensignal tragende Steuerspannung mit veränderlicher Amplitude und konstanter Frequenz steuert, so daß am Ausgang (5) der optischen Modulationseinrichtung (2) austretendes Licht intensitätsmoduliert ist.

6. Optische Sendeeinrichtung nach Anspruch 3,
dadurch gekennzeichnet, daß die Steuereinrichtung (3) die Lichtquelle (1) durch einen kein Nachrichtensignal tragenden Gleichstrom steuert, so daß von der Lichtquelle (1) ausgesendetes Licht eine konstante Intensität hat, und daß die Steuereinrichtung (3) die optische Modulationseinrichtung (2) durch eine das Nachrichtensignal tragende Steuerspannung mit konstanter Amplitude und veränderlicher Frequenz steuert, so daß am Ausgang (5) der optischen Modulationseinrichtung (2) austretende Licht winkelmoduliert ist.

7. Optische Sendeeinrichtung mit einer durch einen Betriebsstrom gesteuerten Lichtquelle (1) und einer durch eine Steuerspannung gesteuerten optischen Modulationseinrichtung (2) für von der Lichtquelle (1) ausgesendetes Licht,
**dadurch gekennzeichnet**, daß eine Steuereinrichtung (3) vorhanden ist, die den Betriebsstrom der Lichtquelle (1) und die Steuerspannung der optischen Modulationseinrichtung (2) entweder durch ein einziges oder zwei verschiedene Nachrichtensignale moduliert, so daß an einem Ausgang (5) der optischen Modulationseinrichtung (2) austretendes Licht durch eines oder zwei Nachrichtensignale moduliert ist.

8. Optische Sendeeinrichtung mit einer durch einen Betriebsstrom gesteuerten Lichtquelle (1) und einer ersten durch eine erste Steuerspannung gesteuerten optischen Modulationseinrichtung (2) für von der Lichtquelle (1) ausgesendetes Licht,
**dadurch gekennzeichnet**, daß eine zweite durch eine zweite Steuerspannung gesteuerte optische Modulationseinrichtung (14) vorhanden ist, die einen Eingang (12) für von der ersten optischen Modulationseinrichtung (2) kommendes Licht hat, und daß eine Steuereinrichtung (3) vorhanden ist, die die Lichtquelle (1) und die beiden optischen Modulationseinrichtungen (2, 14) so steuert, daß an einem Ausgang (13) der zweiten optischen Modulationseinrichtung (14) austretendes Licht durch ein Nachrichtensignal moduliert ist.

9. Optische Sendeeinrichtung nach Anspruch 8,
dadurch gekennzeichnet, daß die Steuereinrichtung (3) die Lichtquelle (1) durch einen kein Nachrichtensignal tragenden Gleichstrom steuert, so daß von der Lichtquelle (1) ausgesendetes Licht eine konstante Intensität hat, daß die Steuereinrichtung (3) die erste optische Modulationseinrichtung (2) durch die erste Steuerspannung mit konstanter Amplitude und konstanter Frequenz steuert, so daß an einem Ausgang (5) der ersten optischen Modulationseinrichtung (2) austretendes Licht keine Nachricht trägt, und daß die Steuereinrichtung (3) die zweite optische Modulationseinrichtung (14) durch die das Nachrichtensignal tragende zweite Steuerspannung steuert, so daß am Ausgang (13) der zweiten optischen Modulationseinrichtung (14) austretendes Licht intensitäts- oder winkelmoduliert ist.

10. Optische Sendeeinrichtung nach Anspruch 9,
dadurch gekennzeichnet, daß das Nachrichtensignal ein amplitudenmoduliertes Signal ist, so daß am Ausgang (13) der zweiten optischen Modulationseinrichtung (14) austretendes Licht intensitätsmoduliert ist.

11. Optische Sendeeinrichtung nach Anspruch 8,
dadurch gekennzeichnet, daß das Nachrichtensignal ein winkelmoduliertes Signal ist, so daß am Ausgang (13) der zweiten optischen Modulationseinrichtung (14) austretendes Licht winkelmoduliert ist.

12. Optische Sendeeinrichtung nach Anspruch 8,
dadurch gekennzeichnet, daß die Steuereinrichtung (3) die Lichtquelle (1) durch einen kein Nachrichtensignal tragenden Gleichstrom steuert, so daß von der Lichtquelle (1) ausgesendetes Licht eine konstante Intensität hat, daß die Steuereinrichtung (3) die erste optische Modulationseinrichtung (2) durch die das Nachrichtensignal tragende erste Steuerspannung mit veränderlicher Amplitude und konstanter Frequenz steuert, so daß an einem Ausgang (5) der ersten optischen Modulationseinrichtung (2) anstehendes Licht intensitätsmoduliert ist, und daß die Steuereinrichtung (3) die zweite optische Modulationseinrichtung (14) durch die das Nachrichtensignal tragende zweite Steuerspannung mit konstanter Amplitude und veränderlicher Frequenz steuert, so daß am Ausgang (13) der zweiten Modulationseinrichtung (14) anstehendes Licht intensitätsmoduliert ist.
